# FASCICULE DE BREVET EUROPEEN

(11) **EP 2 814 697 B1**
(45) Date de publication et mention de la délivrance du brevet: **06.04.2016**
(21) Numéro de dépôt: 13701488.2
(22) Date de dépôt: 30.01.2013
(51) Int. Cl.: B60R 13/07, B62D 25/08

(54) **AGENCEMENT POUR VEHICULE AUTOMOBILE AVEC BOITE A EAU EN TROIS ELEMENTS**
KRAFTFAHRZEUGANORDNUNG MIT EINEM WASSERKASTEN MIT DREI ELEMENTEN
MOTOR VEHICLE ARRANGEMENT HAVING A THREE-ELEMENT WATER BOX

(30) Priorité: 13.02.2012 FR 1251318
(43) Date de publication de la demande: 24.12.2014
(73) Titulaire: Renault S.A.S., 92100 Boulogne-Billancourt (FR)
(72) Inventeur: LE ROY, Julien, F-78000 Versailles (FR); BARREIRO, Emmanuel, F-78770 Villiers Le Mahieu (FR)
(86) Numéro de dépôt international: PCT/EP2013/051768
(87) Numéro de publication internationale: WO 2013/120692

(56) Documents cités:
- DE-A1-102006 029 921
- FR-A1- 2 874 577
- FR-A1- 2 899 554

## Description

### Domaine technique de l'invention

L'invention concerne un agencement comprenant des éléments d'une caisse d'un véhicule automobile, tels que des doublures de pieds avant et/ou des doublures d'ailes latérales sur lesquels sont montés des supports de capot, l'agencement comprenant en outre une boite à eau apte à récolter de l'eau s'écoulant sur le pare-brise du véhicule et à la séparer de l'air devant être acheminé dans un circuit de ventilation du véhicule, la boite à eau ayant la forme générale d'une gouttière s'étendant transversalement à la direction longitudinale du véhicule, aux extrémités de laquelle l'eau est évacuée.

L'invention a pour objet également un procédé de montage d'une boite à eau dans un tel agencement.

### État de la technique

Dans un véhicule automobile voir, par exemple, le FR 2 874 577, on prévoit à la partie inférieure du pare-brise avant une structure, couramment appelée « boîte à eau », destinée essentiellement à recueillir les eaux de ruissellement s'écoulant du pare-brise et à séparer l'eau de l'air notamment à des fins de ventilation de l'habitacle.

La boîte à eau adopte une forme générale de gouttière dont l'ouverture est tournée vers le haut et est fermée par une grille d'auvent. Elle comporte traditionnellement un rebord avant ayant une arête supérieure tournée vers le haut (feuillure), sur laquelle est monté un joint d'étanchéité. Lors de la fermeture du capot, la doublure de capot (il s'agit d'un élément de rigidification agencé du côté intérieur du capot) vient coopérer en appui sur ce joint pour séparer de façon relativement étanche le compartiment moteur de l'espace intérieur de la boîte à eau.

Dans des solutions actuelles, la boîte à eau est réalisée d'une seule pièce sur toute sa longueur considérée dans une direction longitudinale de la boîte à eau, cette direction étant souvent orientée dans une direction transversale au véhicule.

De plus en plus fréquemment, l'encombrement de la partie supérieure du compartiment moteur est important. La mise en place d'une boîte à eau monobloc devient très délicate, impliquant un passage difficile des outillages, notamment des visseuses, nécessite de nombreuses manipulations précises de la boîte à eau en raison de l'accès réduit. Suivant les architectures, la mise en place devient parfois impossible en pratique. Ce problème est particulièrement vrai lorsque deux éléments encombrants de support de capot, destinés à supporter le capot d'accès au compartiment moteur, sont disposés de part et d'autre de la boîte à eau dans la direction longitudinale de la boîte à eau, dans une direction transversale à la caisse du véhicule. En effet, dans le cas où ces supports de capot débordent vers l'intérieur du compartiment moteur (par exemple dans le but de permettre un emboitement ou un encastrement sans charnière), ils forment un obstacle contraignant pour la mise en place de la boîte à eau. On dit que ces supports de capot débordent vers l'intérieur au sens où ils pénètrent en saillie vers l'espace intérieur du compartiment moteur, suivant la direction transversale au véhicule.

D'autre part, il est fréquent que la boîte à eau doive être mise en place par-dessus un mécanisme d'essuie-vitre préalablement fixé, par exemple sur une traverse supérieure de tablier. La boîte à eau est alors traversée par les axes d'essuie-vitre au niveau d'ouvertures ménagées à cet effet dans l'épaisseur de la boîte à eau. Les axes d'essuie-vitre sont inscrits dans des plans verticaux, sensiblement perpendiculaires à la courbe formée par la traverse supérieure de tablier (courbe formée par le galbe du bord inférieur du pare-brise et de la traverse intérieure de baie). Ainsi la mise en place de la boite à eau s'effectue avec la contrainte de faire traverser la boite à eau par les axes d'essuie-vitre, via des orifices prévus à cet effet. Le déplacement de la boite à eau est effectué suivant une trajectoire sensiblement inscrite dans un plan vertical et longitudinal par rapport à la direction longitudinale du véhicule (plan (X, Z) tel que défini ci-après). Cette disposition interdit tout déplacement de la boîte à eau suivant la direction transversale au véhicule (en louvoyant suivant la direction Y définie ci-après), ce qui limite la facilité de mise en place de la boîte à eau, en particulier lorsqu'il convient d'échapper à de tels supports de capot pour parvenir à mettre en place la boîte à eau sous ces derniers.

Il existe donc un réel besoin de disposer d'une solution permettant la mise en place aisée de la boîte à eau indépendamment de l'architecture et de l'encombrement en partie supérieure du compartiment moteur.

### Objet de l'invention

Le but de la présente invention est de proposer un agencement qui remédie aux inconvénients listés ci-dessus.

Notamment, un objet de l'invention est de fournir un agencement permettant la mise en place certaine et aisée de la boîte à eau indépendamment de l'encombrement et de l'architecture au niveau de la partie supérieure du compartiment moteur du véhicule automobile.

Un premier aspect de l'invention concerne un agencement comprenant des éléments d'une caisse d'un véhicule automobile, tels que des doublures de pieds avant et/ou des doublures d'ailes latérales sur lesquels sont montés des supports de capot, l'agencement comprenant en outre une boite à eau apte à récolter de l'eau s'écoulant sur le pare-brise du véhicule et à la séparer de l'air devant être acheminé dans un circuit de ventilation du véhicule, la boite à eau ayant la forme générale d'une gouttière s'étendant transversalement à la direction longitudinale du véhicule, aux extrémités de laquelle l'eau est évacuée. La boite à eau comporte d'une part un élément central et deux éléments d'extrémité de fermeture de la boite à eau raccordés à l'élément central par lesquels l'eau est évacuée, chaque élément d'extrémité s'avançant vers l'intérieur du véhicule, suivant une direction transversale à la caisse du véhicule, au-delà du bord intérieur de chaque support de capot correspondant, afin de permettre le passage de l'élément central entre les supports de capot lors du montage de l'élément central suivant une trajectoire sensiblement inscrite dans un plan vertical et longitudinal à la caisse du véhicule.

L'élément central peut être, à chacune de ses extrémités, en appui sur une face supérieure de chaque élément d'extrémité correspondant, la zone de chevauchement étant au minimum de 7 mm suivant la direction transversale au véhicule. La zone de chevauchement peut être au maximum de 20 mm, notamment 10 mm, suivant la direction transversale au véhicule.

Chaque élément d'extrémité peut avoir une dimension suivant la direction transversale Y qui est inférieure à 150 mm, notamment inférieure à 100 mm.

Le rapport des longueurs entre l'élément central et chaque élément d'extrémité peut être supérieur à 10, ces longueurs étant considérées suivant la direction transversale à la caisse du véhicule.

L'élément central et les éléments d'extrémité peuvent être en matière plastique.

Des moyens d'étanchéité peuvent être prévus entre l'élément central et les éléments d'extrémité, et/ou entre l'élément central et une traverse supérieure de tablier du véhicule à laquelle il est fixé, notamment par au moins une vis s'étendant dans un plan perpendiculaire à la direction transversale au véhicule, -et/ou entre les éléments d'extrémité et les éléments de caisse auxquels ils sont fixés.

Chaque élément d'extrémité peut être fixé à une extrémité correspondante de l'élément central par au moins une vis venant en prise avec ces deux éléments.

Chaque élément d'extrémité peut venir de matière avec un support de capot maintenant le capot par un bord latéral ou être distinct de tout support de capot.

Chaque élément d'extrémité peut comprendre, du côté dirigé vers l'élément de caisse sur lequel il est fixé, une forme concave apte à canaliser dans la direction transversale le déversement hors de la boite à eau de l'eau recueillie par l'élément central.

Un deuxième aspect de l'invention concerne un procédé de montage d'une boite à eau dans un tel agencement, comprenant une étape de fixation de chacun des deux éléments d'extrémité de fermeture de la boite à eau sur un élément de caisse adjacent, tel qu'une doublure de pied avant et/ou une doublure d'aile latérale, suivie d'une étape de fixation de l'élément central de fermeture de la boite à eau, l'élément central étant déplacé lors du montage suivant une trajectoire inscrite dans un plan perpendiculaire à la direction transversale de la caisse du véhicule.

### Description sommaire des dessins

D'autres avantages et caractéristiques ressortiront plus clairement de la description qui va suivre de modes particuliers de réalisation de l'invention donnés à titre d'exemples non limitatifs et représentés sur les dessins annexés, dans lesquels :
- la figure 1 est une vue générale en perspective d'un premier exemple d'agencement selon l'invention comprenant un premier mode de réalisation de boîte à eau,
- les figures 2 à 4 sont des vues de détails de l'agencement de la figure 1,
- les figures 5 et 6 illustrent une partie d'un deuxième mode de réalisation de la boîte à eau pour un deuxième exemple d'agencement selon l'invention,
- et la figure 7 représente schématiquement le montage de la boîte à eau dans le deuxième exemple, en coupe transversale-verticale.

### Description de modes préférentiels de l'invention

La description est faite en référence à un repère orthonormé (X, Y, Z) associé classiquement à un véhicule automobile, dans lequel X est la direction longitudinale avant-arrière du véhicule dirigée vers l'arrière, Y est la direction transversale droite-gauche qui est horizontale et perpendiculaire à X, dirigée vers la droite, et Z est la direction verticale dirigée vers le dessus.

Sur les figures, un agencement pour véhicule automobile est représenté avec une boîte à eau destinée à être montée sur une caisse du véhicule automobile. Cette boîte à eau comporte essentiellement d'une part un élément central 10 de fermeture apte à récolter de l'eau s'écoulant sur le pare-brise du véhicule et à la séparer de l'air devant être acheminé dans un circuit de ventilation du véhicule. La boite à eau a la forme générale d'une gouttière s'étendant transversalement (selon la direction Y) à la direction longitudinale X du véhicule. Dans la boîte à eau, l'eau est guidée dans une direction longitudinale W de la boîte à eau. La boîte à eau comporte essentiellement d'autre part deux éléments d'extrémité 11 de fermeture fixés aux extrémités longitudinales opposées de l'élément central 10. Classiquement mais non exclusivement, la direction longitudinale W de la boîte à eau, correspondant à sa direction de plus grande dimension le long de laquelle l'eau s'écoule globalement, est orientée parallèlement à la direction transversale Y au véhicule.

Chacun des éléments d'extrémité 11 comprend un moyen de fixation sur un élément de caisse associé, ce moyen de fixation pouvant être démontable. En fonction de l'architecture en partie supérieure du compartiment moteur, les éléments de caisse auxquels les éléments d'extrémité sont fixés peuvent être quelconques. A titre d'exemple, il peut s'agir d'une doublure d'un pied avant 12 du châssis du véhicule et/ou une doublure d'une aile latérale 13. Ces éléments de fixation aux éléments de caisse peuvent être de toute nature, tel que des moyens de vissage, d'encliquetage ou équivalents. Les éléments d'extrémité 11 peuvent comprendre au moins une ouverture 18 destinée à être traversée ensuite par une vis solidaire de l'élément de caisse associé ou venant en prise dans ce dernier. Il peut alternativement s'agir d'un système boulon/écrou. Grâce à l'aménagement de tels éléments de fixation au niveau des éléments d'extrémité 11, le montage de la boîte à eau sur la caisse peut se pratiquer avantageusement en deux temps :
- d'abord en fixant chacun des deux éléments d'extrémité 11 sur un élément associé de la caisse tel qu'une doublure d'un pied avant 12 et/ou une doublure d'une aile latérale 13,
- puis en fixant l'élément central 10 sur les éléments d'extrémité 11 préalablement fixés à la caisse.

Ainsi, l'élément central 10 est dans un premier temps fixé à chacune de ses extrémités longitudinales sur l'élément d'extrémité 11 correspondant, par exemple au moyen d'au moins une vis de fixation située dans une zone avant (suivant la direction X).

Pour assurer un meilleur maintien de l'élément central 10 suite à sa fixation sur les éléments d'extrémité 11, il comprend des éléments assurant sa fixation à au moins un élément associé de la caisse tel qu'une traverse supérieure de tablier 14. Ces éléments de fixation de l'élément central 10 sur la caisse sont notamment constitués par au moins une vis préférentiellement inclinée par rapport à l'horizontale. A titre d'exemple, la fixation de l'élément central 10 est réalisée sur la traverse 14 au moyen de quatre vis réparties suivant la direction transversale Y. La traverse 14 présente une surface d'appui inclinée sur laquelle s'appuient l'élément central 10 et les éléments d'extrémité 11. Les vis traversent des ouvertures ménagées dans l'épaisseur de l'élément central 10 et sont fixées à la traverse 14. Elles sont orientées en biais et ont chacune leur axe inscrit dans des plans verticaux respectifs qui sont perpendiculaires localement à la forme bombée de la traverse supérieure de tablier 14 (due au galbe de la partie inférieure du pare-brise et du bord avant de la traverse inférieure de tablier). Les vis s'élèvent vers l'avant et vers le haut suivant Z, permettant le passage aisé de la machine de pose sans que le bord inférieur du pare-brise qui est situé à l'aplomb ne gêne cette opération.

Par une organisation adaptée des éléments central et d'extrémité de fermeture, la fixation de l'élément central 10 peut avantageusement comprendre une étape de mise en place de l'élément central 10 sur les éléments d'extrémité 11 par un déplacement de l'élément central 10 suivant une trajectoire sensiblement inscrite dans un plan (X, Z) qui par définition est perpendiculaire à la direction transversale Y de la caisse du véhicule. La dimension suivant la direction longitudinale W de la boîte à eau des éléments d'extrémité 11 peut avantageusement être prévue la plus petite possible, tandis que la longueur de l'élément central 10 suivant cette même direction W peut être rendue la plus grande possible. Le choix de ces dimensionnements doit toutefois permettre une mise en place de l'élément central 10 suivant une trajectoire sensiblement inscrite dans un plan de déplacement (X, Z), entre les deux supports 15 dédiés au support d'un capot d'accès au compartiment moteur et disposés pour cela de part et d'autre de la boîte à eau dans la direction longitudinale W de la boîte à eau, c'est-à-dire ici dans la direction transversale Y.

Chaque élément d'extrémité 11 s'avance donc vers l'intérieur du véhicule, suivant une direction transversale Y à la caisse du véhicule, au-delà du bord intérieur de chaque support 15 de capot correspondant, afin de permettre le passage de l'élément central 10 entre les supports 15 de capot lors du montage de l'élément central 10 suivant la trajectoire sensiblement inscrite dans un plan vertical et longitudinal (X, Z) à la caisse du véhicule. On entend par « bord intérieur des support » le bord du support situé vers l'intérieur du véhicule, c'est-à-dire le plus proche du plan médian longitudinal-vertical du véhicule.

Il convient dès lors de limiter si possible l'encombrement résultant de la présence des éléments d'extrémité 11. Le rapport entre la dimension longitudinale de l'élément central 10 (considérée suivant la direction longitudinale W de la boîte à eau, ici suivant la direction Y) et la dimension longitudinale de chacun des éléments d'extrémité 11 (considérée aussi dans la direction longitudinale W de la boîte à eau, ici suivant la direction Y) est supérieur à 10. Autrement dit, le rapport des longueurs entre l'élément central 10 et chaque élément d'extrémité 11 est supérieur à 10, ces longueurs étant considérées suivant la direction transversale Y à la caisse du véhicule. A titre d'exemple, chaque élément d'extrémité 11 a une dimension suivant la direction transversale Y qui est inférieure à 150 mm, notamment inférieure à 100 mm.

Ceci facilite la mise en place de la boîte à eau par-dessus un mécanisme d'essuie-vitre préalablement fixé, par exemple sur la traverse supérieure de tablier 14. La boîte à eau est alors traversée par les axes d'essuie-vitre au niveau d'ouvertures ménagées à cet effet dans l'épaisseur de l'élément central 10. Cette disposition permet donc de s'affranchir de l'impossibilité de déplacement de la boîte eau suivant la direction transversale Y au véhicule, en particulier lorsqu'il convient d'échapper aux supports 15 pour parvenir à mettre en place la boîte à eau sous ces derniers.

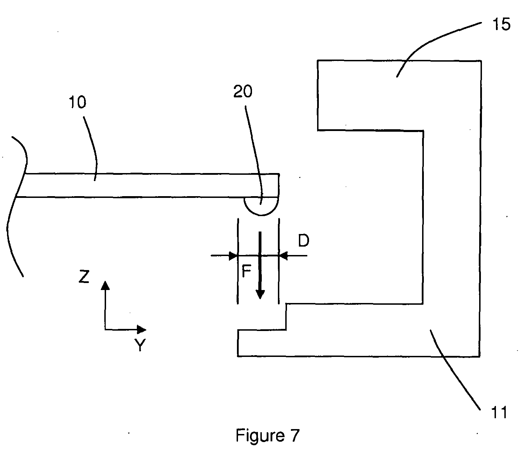

Avantageusement, l'élément central 10 est, à chacune de ses extrémités selon W, en appui sur une face supérieure de chaque élément d'extrémité 11 correspondant. L'extrémité de l'élément central 10 vient s'appliquer par chevauchement (flèche F sur la figure 7) depuis le dessus suivant la direction Z au moment de la mise en place de l'élément central 10 sur les éléments d'extrémité 11. Il en résulte que l'élément central 10 surplombe les éléments d'extrémité 11, favorisant un déversement naturel de l'eau vers les côtés. La zone ou distance de chevauchement D (figure 7) est au minimum de 7 mm suivant la direction transversale Y au véhicule. La zone de chevauchement D est au maximum de 20 mm, notamment 10 mm, suivant la direction transversale Y au véhicule.

Pour assurer un raccord fiable de l'élément central 10 sur les éléments d'extrémité 11, chaque élément d'extrémité 11 est fixé à une extrémité correspondante de l'élément central 10 par au moins une vis venant en prise avec ces deux éléments.

Dans un mode de réalisation, l'élément central 10 et les éléments d'extrémité 11 sont en matière plastique. Le plastique présente l'avantage d'être insensible à la corrosion et de permettre un dimensionnement précis de son épaisseur, en vue de répondre aux contraintes d'absorption de chocs par piéton.

La boîte à eau comporte de plus des moyens d'étanchéité à l'eau, par exemple sous la forme de joints, notamment appliqués au pistolet :
- entre l'élément central 10 et les éléments d'extrémité 11 ; ce moyen d'étanchéité 20 (figure 7) est comprimé lors de l'actionnement de la fixation de l'élément central 10 sur les éléments d'extrémité 11.
- et/ou entre l'élément central 10 et l'élément de caisse auquel il est fixé (ici la traverse supérieure de tablier 14) ; ce moyen d'étanchéité est comprimé lors de la fixation de l'élément central 10 sur la traverse 14.
- et/ou entre les éléments d'extrémité 11 et les éléments de caisse auxquels ils sont fixés (ici la doublure de pied avant 12 et/ou la doublure d'aile latérale 13) ; ce moyen d'étanchéité est comprimé lors de la fixation des éléments d'extrémité 11 sur les éléments de caisse associés.

L'agencement peut comprendre d'autres moyens d'étanchéité à l'eau, tel qu'un joint caoutchouc compressible, constitué d'une ou plusieurs partie(s) agencée(s) bout à bout et chaussé(s) sur la feuillure supérieure de la boite à eau, tant au niveau de l'élément central 10 que des éléments d'extrémité 11 de fermeture de la boite à eau. Ce joint est destiné à être comprimé par la doublure de capot qui vient en appui lorsque le capot est fermé pour isoler le compartiment moteur de l'espace intérieur de la boîte à eau.

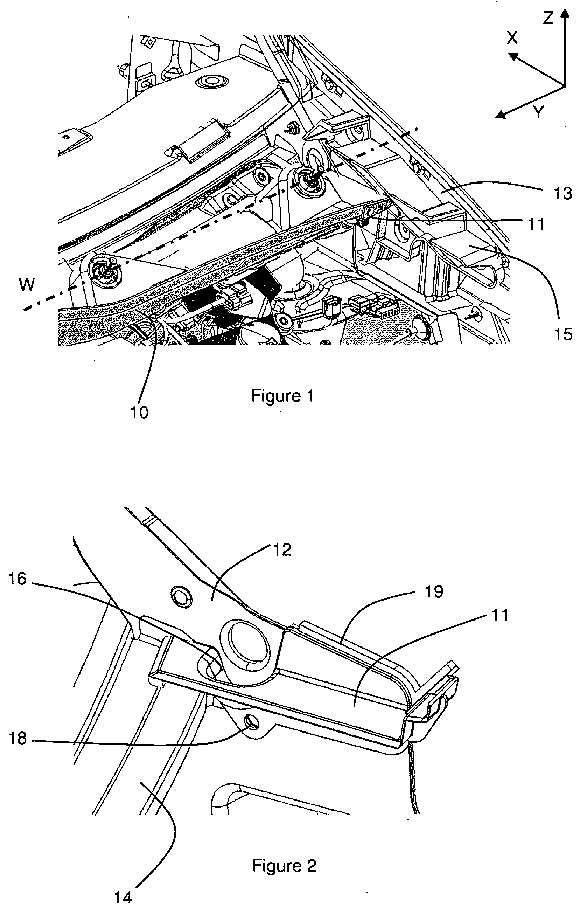

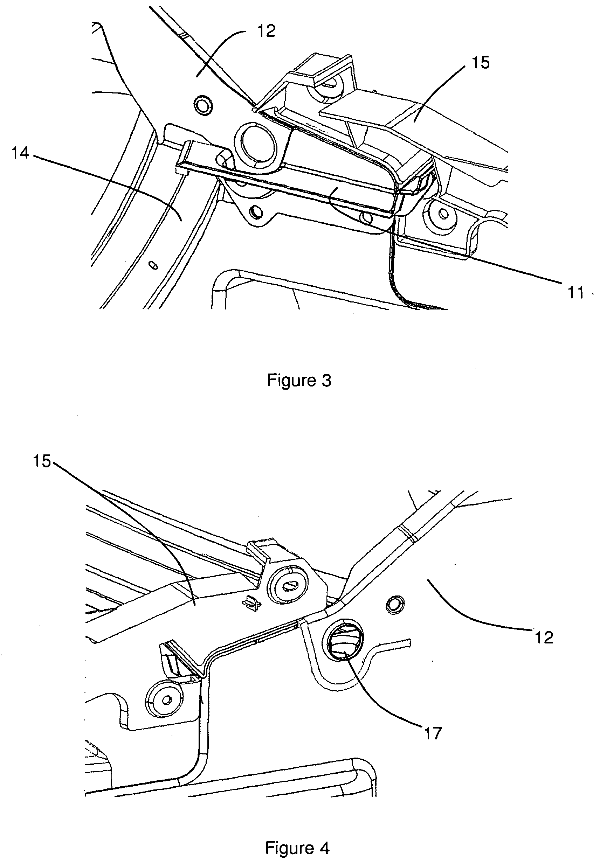

En référence aux figures 2 et 3 notamment, chaque élément d'extrémité 11 comprend, du côté dirigé vers l'élément de caisse sur lequel il est fixé, une forme concave 16 apte à canaliser dans la direction transversale Y le déversement hors de la boite à eau de l'eau recueillie par l'élément central 10. La direction de canalisation et de déversement n'est donc pas selon Z. L'agencement qui comprend d'une part les supports 15 et d'autre part les éléments de caisse sur lesquels la boîte à eau est fixée au moins par ses éléments d'extrémité 11, comprend en complément un conduit d'évacuation de l'eau déversée par la forme concave 16. Ce conduit d'évacuation destiné à conduire l'eau au compartiment moteur situé sous la boîte à eau est équipé d'un clapet d'obturation 17 agencé au niveau de l'élément de caisse auquel est fixé l'élément d'extrémité 11. Ici, le clapet 17 équipe la doublure de pied avant 12. L'eau s'écoule ensuite dans l'espace entre la doublure de pied avant 12 et l'aile latérale du véhicule. Le clapet 17 est destiné à éviter les nuisances sonores en provenance du moteur.

Comme indiqué précédemment, l'agencement comprend deux supports 15 de capot destinés à supporter le capot d'accès au compartiment moteur et disposés de part et d'autre de l'élément central 10 dans la direction longitudinale W de la boîte à eau, dans la direction transversale Y à la caisse.

Comme l'illustrent les figures 1 à 4, chaque élément d'extrémité 11 est distinct de tout support 15 de capot. L'agencement comprend alors avantageusement des éléments d'étanchéité 19 à l'eau interposés entre les supports 15 et les éléments d'extrémité 11.

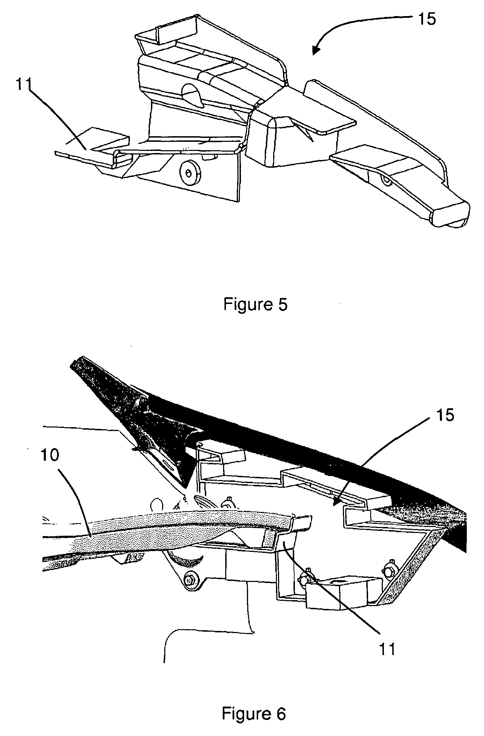

Toutefois en référence aux figures 5 et 6, pour garantir que la distance entre un élément d'extrémité 11 donné et le support 15 soit nulle, chacun des éléments d'extrémité 11 peut alternativement venir de matière avec un support 15 de capot par un bord latéral. Il en résulte que chaque support 15 de capot est formé dans une même pièce avec un élément d'extrémité 11.

## Revendications

1. Agencement comprenant des éléments d'une caisse d'un véhicule automobile, tels que des doublures de pieds avant (12) et/ou des doublures d'ailes latérales (13) sur lesquels sont montés des supports (15) de capot, l'agencement comprenant en outre une boite à eau apte à récolter de l'eau s'écoulant sur le pare-brise du véhicule et à la séparer de l'air devant être acheminé dans un circuit de ventilation du véhicule, la boite à eau ayant la forme générale d'une gouttière s'étendant transversalement (Y) à la direction longitudinale (X) du véhicule, aux extrémités de laquelle l'eau est évacuée, **caractérisé en ce que** la boite à eau comporte d'une part un élément central (10) et deux éléments d'extrémité (11) de fermeture de la boite à eau raccordés à l'élément central (10) par lesquels l'eau est évacuée, chaque élément d'extrémité (11) s'avançant vers l'intérieur du véhicule, suivant une direction transversale (Y) à la caisse du véhicule, au-delà du bord intérieur de chaque support (15) de capot correspondant, afin de permettre le passage de l'élément central (10) entre les supports (15) de capot lors du montage de l'élément central (10) suivant une trajectoire sensiblement inscrite dans un plan vertical et longitudinal (X, Z) à la caisse du véhicule.

2. Agencement selon la revendication 1, **caractérisé en ce que** l'élément central (10) est, à chacune de ses extrémités, en appui sur une face supérieure de chaque élément d'extrémité (11) correspondant, la zone de chevauchement (D) étant au minimum de 7 mm suivant la direction transversale (Y) au véhicule.

3. Agencement selon la revendication 1 ou 2, **caractérisé en ce que** la zone de chevauchement (D) est au maximum de 20 mm, notamment 10 mm, suivant la direction transversale (Y) au véhicule.

4. Agencement selon l'une quelconque des revendications précédentes, **caractérisé en ce que** chaque élément d'extrémité (11) a une dimension suivant la direction transversale Y qui est inférieure à 150 mm, notamment inférieure à 100 mm.

5. Agencement selon l'une quelconque des revendications précédentes, **caractérisé en ce que** le rapport des longueurs entre l'élément central (10) et chaque élément d'extrémité (11) est supérieur à 10, ces longueurs étant considérées suivant la direction transversale (Y) à la caisse du véhicule.

6. Agencement selon l'une quelconque des revendications précédentes, **caractérisé en ce que** l'élément central (10) et les éléments d'extrémité (11) sont en matière plastique.

7. Agencement selon l'une quelconque des revendications précédentes, **caractérisé en ce que** des moyens d'étanchéité sont prévus :
- entre l'élément central (10) et les éléments d'extrémité (11),
- et/ou entre l'élément central (10) et une traverse supérieure de tablier (14) du véhicule à laquelle il est fixé, notamment par au moins une vis s'étendant dans un plan (X, Z) perpendiculaire à la direction transversale (Y) au véhicule,
- et/ou entre les éléments d'extrémité (10) et les éléments de caisse auxquels ils sont fixés.

8. Agencement selon l'une quelconque des revendications précédentes, **caractérisé en ce que** chaque élément d'extrémité (11) est fixé à une extrémité correspondante de l'élément central (10) par au moins une vis venant en prise avec ces deux éléments.

9. Agencement selon l'une quelconque des revendications précédentes, **caractérisé en ce que** chaque élément d'extrémité (11) vient de matière avec un support de capot maintenant le capot par un bord latéral.

10. Agencement selon l'une quelconque des revendications 1 à 8, **caractérisé en ce que** chaque élément d'extrémité (11) est distinct de tout support (15) de capot.

11. Agencement selon l'une quelconque des revendications précédentes, **caractérisé en ce que** chaque élément d'extrémité (11) comprend, du côté dirigé vers l'élément de caisse sur lequel il est fixé, une forme concave (16) apte à canaliser dans la direction transversale (Y) le déversement hors de la boite à eau de l'eau recueillie par l'élément central (10).

12. Procédé de montage d'une boite à eau dans un agencement selon l'une quelconque des revendications précédentes, **caractérisé en ce qu'**il comprend une étape de fixation de chacun des deux éléments d'extrémité (11) de fermeture de la boite à eau sur un élément de caisse adjacent, tel qu'une doublure de pied avant (12) et/ou une doublure d'aile latérale (13), suivie d'une étape de fixation de l'élément central (10) de fermeture de la boite à eau, l'élément central (10) étant déplacé lors du montage suivant une trajectoire inscrite dans un plan (X, Z) perpendiculaire à la direction transversale (Y) de la caisse du véhicule.

## Patentansprüche

1. Anordnung, aufweisend Elemente einer Karosserie eines Kraftfahrzeugs, wie beispielsweise Frontholmverkleidungen (12) und/oder Kotflügelverkleidungen (13) an welchen Motorhaubenträger (15) montiert sind, wobei die Anordnung außerdem einen Wasserkasten aufweist, welcher geeignet ist, das Wasser zu sammeln, welches über die Windschutzscheibe des Fahrzeugs fließt, und es von der Luft zu trennen, bevor es in einen Lüftungskreislauf des Fahrzeugs weitergeleitet wird, wobei der Wasserkasten die allgemeine Form einer Rinne besitzt, welche sich quer (Y) zur longitudinalen (X) Richtung des Fahrzeugs erstreckt, an deren Enden das Wasser entnommen wird, **dadurch gekennzeichnet, dass** der Wasserkasten einerseits ein zentrales Element (10) und zwei Endelemente (11) zum Verschließen des Wasserkastens aufweist, welche an das zentrale Element (10) angeschlossen sind, über welche das Wasser entnommen wird, wobei jedes Endelement (11) sich gemäß einer zur Karosserie des Fahrzeugs quer verlaufenden Richtung (Y) in das Innere des Fahrzeugs oberhalb des Innenrandes eines jeden entsprechenden Motorhaubenträgers (15) erstreckt, um den Durchtritt des zentralen Elements (10) zwischen den Motorhaubenträgern (15) bei der Montage des zentralen Elements (10) gemäß einer Bahn zu ermöglichen, welche im Wesentlichen in einer Ebene (X, Z) liegt, die senkrecht und longitudinal zur Karosserie des Fahrzeug verläuft.

2. Anordnung nach Anspruch 1, **dadurch gekennzeichnet, dass** sich das zentrale Element (10) an jedem seiner Enden an einer oberen Fläche jedes entsprechenden Endelements (11) abstützt, wobei der Überlappungsbereich (D) minimal 7 mm gemäß der zum Fahrzeug quer verlaufenden Richtung (Y) beträgt.

3. Anordnung nach Anspruch 1 oder 2, **dadurch gekennzeichnet, dass** der Überlappungsbereich (D) maximal 20 mm, insbesondere 10 mm, gemäß der zum Fahrzeug quer verlaufenden Richtung (Y) beträgt.

4. Anordnung nach einem der vorhergehenden Ansprüche, **dadurch gekennzeichnet, dass** jedes Endelement (11) eine Abmessung gemäß der Querrichtung Y besitzt, welche kleiner als 150 mm, insbesondere kleiner als 100 mm, ist.

5. Anordnung nach einem der vorhergehenden Ansprüche, **dadurch gekennzeichnet, dass** das Längenverhältnis zwischen dem zentralen Element (10) und jedem Endelement (11) größer als 10 ist, wobei diese Längen gemäß der zur Karosserie des Fahrzeugs quer verlaufenden Richtung (Y) berücksichtigt werden.

6. Anordnung nach einem der vorhergehenden Ansprüche, **dadurch gekennzeichnet, dass** das zentrale Element (10) und die Endelemente (11) aus Kunststoff bestehen.

7. Anordnung nach einem der vorhergehenden Ansprüche, **dadurch gekennzeichnet, dass** Dichtungsmittel vorgesehen sind:
zwischen dem zentralen Element (10) und den Endelementen (11)
und/oder zwischen dem zentralen Element (10) und einem oberen Schottwand-Querträger (14) des Fahrzeugs, an welcher es befestigt ist, insbesondere durch mindestens eine Schraube, welche sich in einer Ebene (X, Z) erstreckt, die senkrecht zur zum Fahrzeug quer verlaufenden Richtung (Y) ist,
und/oder zwischen den Endelementen (10) und den Karosserieelementen, an welchen sie befestigt sind.

8. Anordnung nach einem der vorhergehenden Ansprüche, **dadurch gekennzeichnet, dass** jedes Endelement (11) an einem entsprechenden Ende des zentralen Elements (10) durch mindestens eine Schraube befestigt ist, welche mit diesen beiden Elementen in Eingriff kommt.

9. Anordnung nach einem der vorhergehenden Ansprüche, **dadurch gekennzeichnet, dass** jedes Endelement (11) werkstoffmäßig einstückig mit einem Motorhaubenträger ist, welcher die Motorhaube durch eine Seitenkante hält.

10. Anordnung nach einem Ansprüche 1 bis 8, **dadurch gekennzeichnet, dass** jedes Endelement (11) vom ganzen Motorhaubenträger (15) verschieden ist.

11. Anordnung nach einem der vorhergehenden Ansprüche, **dadurch gekennzeichnet, dass** jedes Endelement (11) an der dem Karosserieelement zugewandten Seite, an der es befestigt ist, eine konkave Form (16) aufweist, welche geeignet ist, das Ableiten des durch das zentrale Element (10) gesammelte Wasser aus dem Wasserkasten in der Querrichtung (Y) zu kanalisieren.

12. Verfahren zur Montage eines Wasserkastens in einer Anordnung nach einem der vorhergehenden Ansprüche, **dadurch gekennzeichnet, dass** es einen Schritt des Befestigens eines jeden der beiden Endelemente (11) zum Schließen des Wasserkastens an einem benachbarten Karosserieelement aufweist, wie beispielsweise eine Frontholmverkleidung (12) und/oder eine Kotflügelverkleidung (13), welcher von einem Schritt des Befestigens des zentralen Elements (10) zum Schließen des Wasserkastens gefolgt wird, wobei das zentrale Element (10) bei der Montage gemäß einer Bahn verlagert wird, welche in einer Ebene (X, Z) liegt, die senkrechten zur Querrichtung (Y) der Karosserie des Fahrzeug verläuft.

## Claims

1. Arrangement including elements of a body of a motor vehicle, such as A pillar liners (12) and/or lateral fender liners (13) on which hood supports (15) are mounted, the arrangement further including a water box adapted to collect water flowing over the windshield of the vehicle and to separate it from air to be routed into a ventilation circuit of the vehicle, the water box having the general shape of a gutter extending transversely (Y) to the longitudinal direction (X) of the vehicle, at the ends of which water is discharged, **characterized in that** the water box includes on the one hand a central element (10) and two end elements (11) for closing the water box connected to the central element (10) by which water is discharged, each end element (11) extending toward the interior of the vehicle, along a direction (Y) transverse to the body of the vehicle, beyond the interior edge of each corresponding hood support (15), in order to allow the central element (10) to pass between the hood supports (15) when mounting the central element (10) along a path substantially inscribed in a vertical plane (X, Z) longitudinal with respect to the body of the vehicle.

2. Arrangement according to Claim 1, **characterized in that** the central element (10) bears at each of its ends on an upper face of each corresponding end element (11), the overlap zone (D) extending at least 7 mm along the direction (Y) transverse to the vehicle.

3. Arrangement according to Claim 1 or 2, **characterized in that** the overlap zone (D) is at most 20 mm, notably 10 mm, along the direction (Y) transverse to the vehicle.

4. Arrangement according to any one of the preceding claims, **characterized in that** each end element (11) has a dimension along the transverse direction (Y) that is less than 150 mm, notably less than 100 mm.

5. Arrangement according to any one of the preceding claims, **characterized in that** the ratio of the lengths of the central element (10) and each end element (11) is greater than 10, these lengths being considered in the direction (Y) transverse to the body of the vehicle.

6. Arrangement according to any one of the preceding claims, **characterized in that** the central element (10) and the end elements (11) are made of plastic material.

7. Arrangement according to any one of the preceding claims, **characterized in that** sealing means are provided between:
- the central element (10) and the end elements (11), and/or
- the central element (10) and a firewall upper crossmember (14) of the vehicle to which it is fixed, notably by at least one screw extending in a plane (X, Z) perpendicular to the direction (Y) transverse to the vehicle, and/or
- the end elements (10) and the body elements to which they are fixed.

8. Arrangement according to any one of the preceding claims, **characterized in that** each end element (11) is fixed to a corresponding end of the central element (10) by at least one screw engaged with these two elements.

9. Arrangement according to any one of the preceding claims, **characterized in that** each end element (11) is in one piece with a hood support retaining one lateral edge of the hood.

10. Arrangement according to any one of Claims 1 to 8, **characterized in that** each end element (11) is separate from any hood support (15).

11. Arrangement according to any one of the preceding claims, **characterized in that** each end element (11) includes, on the side directed toward the body element to which it is fixed, a concave shape (16) adapted to channel in the transverse direction (Y) the outflow from the water box of water collected by the central element (10).

12. Method of mounting a water box in an arrangement according to any one of the preceding claims, **characterized in that** it includes a step of fixing each of the two end elements (11) for closing the water box to an adjacent body element, such as an A pillar liner (12) and/or a lateral fender liner (13), followed by a step of fixing the central element (10) for closing the water box, the central element (10) being moved when mounting it along a path inscribed in a plane (X, Z) perpendicular to the transverse direction (Y) of the body of the vehicle.
